# EUROPEAN PATENT SPECIFICATION

(11) **EP 3 229 401 B1**
(45) Date of publication and mention of the grant of the patent: **05.12.2018**
(21) Application number: 15865484.8
(22) Date of filing: 12.03.2015
(51) Int. Cl.: H04L 12/24

(54) **MANAGEMENT STRUCTURE SPLITTING METHOD FOR TREE-STRUCTURE NETWORK**
VERWALTUNGSSTRUKTURTEILUNGSVERFAHREN FÜR EIN NETZWERK MIT BAUMSTRUKTUR
PROCÉDÉ DE FRACTIONNEMENT DE STRUCTURE DE GESTION POUR RÉSEAU À STRUCTURE ARBORESCENTE

(30) Priority: 03.12.2014 CN 201410725489
(43) Date of publication of application: 11.10.2017
(73) Proprietor: Institute of Acoustics, Chinese Academy of Sciences, Haidian District Beijing 100190 (CN); Shanghai 3NTV Network Technology Co. Ltd., Shanghai 200072 (CN); Beijing Hili Technology Co. Ltd, Beijing 100190 (CN)
(72) Inventor: WANG, Jinlin, Beijing 100190 (CN); YOU, Jiali, Beijing 100190 (CN); LIU, Xue, Beijing 100190 (CN); CHENG, Gang, Beijing 100190 (CN); DENG, Haojiang, Beijing 100190 (CN)
(74) Representative: Hanna Moore + Curley
(86) International application number: PCT/CN2015/074084
(87) International publication number: WO 2016/086547

(56) References cited:
- CN-A- 101 408 895
- CN-A- 102 111 912
- US-A1- 2006 218 301
- US-B1- 7 010 622
- QUAN, JIXIU: 'Self-organizing Tree Structure of the P2P Network Research and Implementation' CHINA MASTER'S THESES FULL-TEXT DATABASE 22 May 2014, pages 25 - 26, XP008185331

## Description

### TECHNICAL FIELD

The present invention relates to the technical field of computer network, and particularly to a management structure splitting method for a tree-structure network.

### BACKGROUND OF THE INVENTION

As the computer and networks are being developed constantly, the scale of nodes in the internet is growing constantly, and also there is a growing demand for the quality of service. Coordinated processing and management for a large scale of nodes is a key issue in various systems, and the nodes in the real network are structured and managed in a tree-shaped topology. A root node in the tree-shaped structure is typically responsible for searching, inquiring, positioning, service responding, etc., and if the network is scaled up, then there will also be rapidly growing load on the root node. Accordingly if the scale of the network exceeds a certain degree, then an additional root node will be deployed, or a new node will be selected to offload the load on the root node. In recent years, network node autonomous management system, e.g., P2P network has been developed rapidly, and in the tree-shaped structure where a large number of child nodes exist, it is an important problem that how to split the original tree-shaped structure and then deploy or assign a new root node in order to split the original nodes management.

The relevant state of the art is represented by US 7010622 B1.

### SUMMARY OF THE INVENTION

An object of the present invention is to address the drawback of the load on the root node being considerable in the tree-structure network at a too large scale in the prior art, and therefore providing a management structure splitting method for a tree-structure network.

In order to attain the object above, the invention provides a management structure splitting method for a tree-structure network. The tree-structure network including a root node R and a number of child nodes, each child node comprises a list of child nodes, a counter of the number of child nodes, a list of neighbor nodes, and a parent node pointer; the method comprising:
step 1), if Q(R) is greater than a preset parameter L, proceeding to step 2); otherwise, exiting from the operation; wherein Q(x) is used to represent a function of calculating the total number of all the child nodes under a root node x in the tree with x as the root node;
step 2), it is assumed that a node o is a dynamic root node, representing a list of child nodes with the node o being a parent node as *P* = {*p*₁,*p*₂,...,*pᵢ*,...}; wherein initially the node o is the root node R;
step 3), if all the next generation child nodes *pᵢ* of the node o satisfy Q(*pᵢ*)<Q(o)/2, aggregating all the child nodes into two classes with such an aggregation optimization objective that the difference between the total numbers of child nodes of the nodes in the two classes is minimal; and after aggregating into two classes, deploying or assigning a new node o' as a newly split management root node, making a parent node of one class of nodes in the aggregated two classes in a management structure point to the new management root node o', and ending the operation; otherwise, proceeding to step 4);
step 4), for any one child node *pᵢ* in the next generation of the node o, if Q(*pᵢ*)=Q(o)/2, extracting *pᵢ* and a subtree thereof as a new management tree, deploying a new management root node at the position of *pᵢ* or a network position above *pᵢ*, making *pᵢ* point to the new management root node, and then ending the operation; otherwise, proceeding to step 5); and
step 5), for any one child node *pᵢ* in the next generation of the node o, if Q(*pᵢ*)>Q(o)/2, setting the node *pᵢ* to be the dynamic root node o, and re-executing the step 3).

The present invention has the following advantages:

The method according to the present invention can improve the node management efficiency in the network, and alleviate the service load on the root node.

### BRIEF DESCRIPTION OF THE DRAWINGS

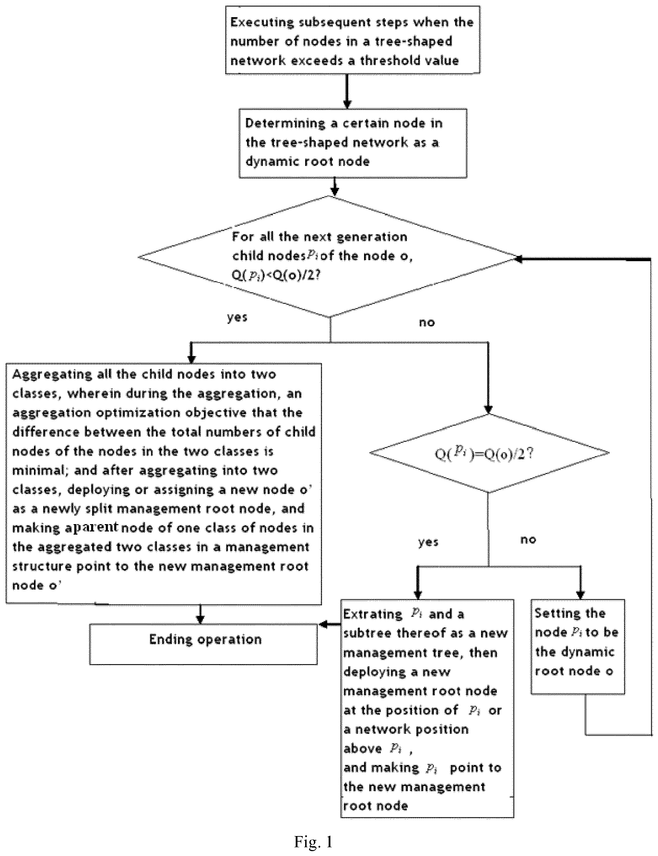

Fig. 1 is a flow chart of a management structure splitting method for a tree-structure network according to the present invention.

### DETAILED DESCRIPTION OF THE INVENTION

The invention will be described below in further details in conjunction with the accompanying drawings.

All the nodes in a network can constitute a tree-shaped network in which a root node plays a management role, there are a parent node and possibly a number of child nodes for each of the other nodes than the root node, and the nodes at the same level in the tree may have a neighbor node relationship, that is, a neighbor node of a certain node refers to another node at the same level in the tree as the node. Each node constituting the tree has a data structure comprising a list of child nodes, a counter of the number of child nodes, a list of neighbor nodes, and a parent node pointer. As their names imply, the list of child nodes is used to describe information about child nodes of a present node; the counter of the number of child nodes is used to describe the number of child nodes of the present node; the list of neighbor nodes is used to describe information about neighbor nodes of the present node; and the parent node pointer is used to describe a pointer to a parent node of the present node.

If there are a too large number of nodes in a tree-shaped network, the scale of the entire network will become very large, thus hindering the network from being managed. In view of this, the tree-shaped network needs to be split using the method according to the present invention into two new tree-shaped networks including child nodes, the numbers of the child nodes in the two new tree-shaped networks shall be balanced as much as possible.

The method according to the present invention will be further described below in conjunction with Fig. 1.

It is assumed that there is a tree-shaped network comprising M levels, and there is a unique root node R in the tree-shaped network; and Q(x) is used to represent a function of calculating the total number of all the child nodes under a root node x in the tree with x as the root node, and the magnitude thereof can be accumulated by setting a counter of the number of child node. The tree-shaped network may be split in the following steps:
step 1), if Q(R) > L (where L is a preset parameter), proceeding to step 2); otherwise, exiting from the operation;
step 2), it is assumed that a node o is a dynamic root node, representing a list of child nodes with the node o being a parent node as *P* = {*p*₁,*p*₂,...,*pᵢ*,*...*}; wherein initially the node o is the root node R;
step 3), if all the next generation child nodes *pᵢ* of the node o satisfy Q(*pᵢ*)<Q(o)/2, aggregating all the child nodes (all the nodes in the tree-shaped network than the root node) into two classes with such an aggregation optimization objective that the difference between the total numbers of child nodes of the nodes in the two classes is minimal; and after aggregating into two classes, deploying or assigning a new node o' as a newly split management root node, making a parent node of one class of nodes in the aggregated two classes in a management structure point to the new management root node o' (a previous management root node of the other class of nodes in the aggregated two classes remaining), and ending the operation; otherwise, proceeding to step 4);
step 4), for any one child node *pᵢ* in the next generation of the node o, if Q(*pᵢ*)=Q(o)/2, ending the operation; otherwise, proceeding to step 5); and
step 5), for any one child node *pᵢ* in the next generation of the node o, if Q(*pᵢ*)>Q(o)/2, setting the node *pᵢ* to be the dynamic root node o, and re-executing the step 3).

## Claims

1. A management structure splitting method for a tree-structure network, the tree-structure network comprising a root node R and a number of child nodes, each child node comprises a list of child nodes, a counter of the number of child nodes, a list of neighbor nodes, and a parent node pointer, the method comprising:
step 1), if Q(R) is greater than a preset parameter L, proceeding to step 2); otherwise, exiting from the operation; wherein Q(x) is used to represent a function of calculating the total number of all the child nodes under a root node x in the tree with x as the root node;
step 2), it is assumed that a node o is a dynamic root node, representing a list of child nodes with the node o being a parent node as *P* = {*p*₁,*p*₂,...,*pᵢ*,...}; wherein initially the node o is the root node R;
step 3), if all the next generation child nodes *pᵢ* of the node o satisfy Q(*pᵢ*)<Q(o)/2, aggregating all the child nodes into two classes with such an aggregation optimization objective that the difference between the total numbers of child nodes of the nodes in the two classes is minimal; and after aggregating into two classes, deploying or assigning a new node o' as a newly split management root node, making a parent node of one class of nodes in the aggregated two classes in a management structure point to the new management root node o', and ending the operation; otherwise, proceeding to step 4);
step 4), for any one child node *pᵢ* in the next generation of the node o, if Q(*pᵢ*)=Q(o)/2, extracting *pᵢ* and a subtree thereof as a new management tree, deploying a new management root node at the position of *pᵢ* or a network position above *pᵢ*, making *pᵢ* point to the new management root node, and then ending the operation; otherwise, proceeding to step 5); and
step 5), for any one child node *pᵢ* in the next generation of the node o, if Q(*pᵢ*)>Q(o)/2, setting the node *pᵢ* to be dynamic root node o, and re-executing the step 3).

## Patentansprüche

1. Verwaltungsstruktur-Aufteilungsverfahren für ein Netzwerk mit Baumstruktur, wobei das Netzwerk mit Baumstruktur einen Stammknoten R und eine Anzahl untergeordneter Knoten umfasst, jeder untergeordnete Knoten eine Liste untergeordneter Knoten, einen Zähler der Anzahl untergeordneter Knoten, eine Liste von Nachbarknoten und einen Zeiger von übergeordneten Knoten umfasst, das Verfahren umfassend:
Schritt 1), wenn Q(R) größer ist als ein vorgegebener Parameter L, Übergehen zu Schritt 2); andernfalls Verlassen der Operation; wobei Q(x) verwendet wird, um eine Funktion des Berechnens der Gesamtzahl aller untergeordneter Knoten unter einem Stammknoten x in dem Baum mit x als Stammknoten darzustellen;
Schritt 2), es wird angenommen, dass ein Knoten o ein dynamischer Stammknoten ist, der eine Liste von untergeordneten Knoten mit dem Knoten o als übergeordneter Knoten als *P* = {*p*₁,*p*₂,...,*pᵢ*,...} darstellt, wobei der Knoten o ursprünglich der Stammknoten R ist;
Schritt 3), wenn alle untergeordneten Knoten der nächsten Generation *pᵢ* des Knotens o Q(*pᵢ*)<Q(o)/2 genügen, Aggregieren aller untergeordneter Knoten in zwei Klassen mit einem derartigen Aggregierungsoptimierungsziel, dass die Differenz zwischen der Gesamtzahl untergeordneter Knoten der Knoten in den beiden Klassen minimal ist; und nach dem Aggregieren in zwei Klassen Bereitstellen oder Zuordnen einen neuen Knotens o' als neu geteilter Verwaltungs-Stammknoten, Bilden eines übergeordneten Knotens einer Knotenklasse in den aggregierten zwei Klassen in einem Verwaltungsstrukturpunkt zu dem neuen Verwaltungs-Stammknoten o' und Beenden der Operation; andernfalls Übergehen zu Schritt 4);
Schritt 4), für jeden untergeordneten Knoten *pᵢ* in der nächsten Generation des Knotens o, wenn Q(*pᵢ*)=Q(o)/2 Extrahieren von *pᵢ* und eines Unterbaums davon als neuen Verwaltungsbaum, Bereitstellen eines neuen Verwaltungs-Stammknotens an der Position von *pᵢ* oder einer Netzwerkposition oberhalb von *pᵢ* , Bilden des *pᵢ* -Punktes zu dem neuen Verwaltungs-Stammknoten und dann Beenden der Operation; andernfalls Übergehen zu Schritt 5); und
Schritt 5), für jeden untergeordneten Knoten *pᵢ* in der nächsten Generation des Knotens o, wenn Q(*pᵢ*)>Q(o)/2, Einstellen des Knotens *pᵢ* als dynamischen Stammknoten o und erneutes Durchführen von Schritt 3).

## Revendications

1. Procédé de fractionnement de structure de gestion pour un réseau à structure arborescente, le réseau à structure arborescente comprenant un noeud racine R et un certain nombre de noeuds enfants, chaque noeud enfant comprenant une liste de noeuds enfants, un compteur du nombre de noeuds enfants, une liste de noeuds voisins et un pointeur de noeud parent, le procédé comprenant :
étape 1), si Q (R) est supérieur à un paramètre L prédéfini, procéder à l'étape 2) ; autrement, sortir de l'opération ; Q(x) étant utilisé pour représenter une fonction de calcul du nombre total de tous les noeuds enfants sous un noeud racine x dans l'arbre avec x en tant que noeud racine ;
étape 2), il est supposé qu'un noeud o est un noeud racine dynamique, représenter une liste de noeuds enfants avec le noeud o qui est un noeud parent telle que *P* = {*p*₁,*p*₂,...,*pᵢ*,...} initialement, le noeud o étant le noeud racine R ;
étape 3), si tous les noeuds enfants de prochaine génération *pᵢ* du noeud o satisfont Q(*pᵢ*)<Q(o)/2, agréger tous les noeuds enfants en deux classes avec un objectif d'optimisation d'agrégation tel que la différence entre les nombres totaux de noeuds enfants des noeuds dans les deux classes est minimale ; et après l'agrégation en deux classes, déployer ou affecter un nouveau noeud o' en tant que noeud racine de gestion nouvellement fractionné, amener un noeud parent d'une classe de noeuds dans les deux classes agrégées dans une structure de gestion à pointer vers le nouveau noeud racine de gestion o', et mettre fin à l'opération ; autrement, procéder à l'étape 4) ;
étape 4), pour un quelconque noeud enfant *pᵢ* dans la génération suivante du noeud o, si Q(*pᵢ*)=Q(o)/2, extraire *pᵢ* et un sous-arbre de celui-ci en tant que nouvel arbre de gestion, déployer un nouveau noeud racine de gestion à la position de *pᵢ* ou à une position de réseau au-dessus de *pi*, amener *pᵢ* à pointer vers le nouveau noeud racine de gestion, puis mettre fin à l'opération ; autrement, procéder à l'étape 5) ; et
étape 5), pour un quelconque noeud enfant *pᵢ* dans la génération suivante du noeud o, si Q(*pᵢ*)>Q(o)/2, régler le noeud *pᵢ* de façon à ce que celui-ci soit un noeud racine dynamique o, et ré-exécuter l'étape 3).
